# EUROPÄISCHE PATENTSCHRIFT

(11) **EP 2 842 023 B1**
(45) Veröffentlichungstag und Bekanntmachung des Hinweises auf die Patenterteilung: **16.10.2019**
(21) Anmeldenummer: 13718179.8
(22) Anmeldetag: 22.04.2013
(51) Int. Cl.: G06F 3/0488, B60K 35/00, G06F 3/0482

(54) **VERFAHREN UND VORRICHTUNG ZUM VISUALISIEREN EINES HIERARCHISCH SORTIERBAREN DATENBESTANDS, INSBESONDERE IN EINEM FAHRZEUG**
METHOD AND DEVICE FOR VISUALISING A HIERARCHICALLY SORTABLE DATABASE, IN PARTICULAR IN A VEHICLE
PROCÉDÉ ET DISPOSITIF DE VISUALISATION D'UN ENSEMBLE DE DONNÉES POUVANT ÊTRE TRIÉ DE MANIÈRE HIÉRARCHIQUE, EN PARTICULIER DANS UN VÉHICULE

(30) Priorität: 28.04.2012 DE 102012008778
(43) Veröffentlichungstag der Anmeldung: 04.03.2015
(73) Patentinhaber: Volkswagen Aktiengesellschaft, 38440 Wolfsburg (DE)
(72) Erfinder: HÖHNE, Sven, 38518 Gifhorn (DE)
(74) Vertreter: Reitstötter Kinzebach
(86) Internationale Anmeldenummer: PCT/EP2013/058244
(87) Internationale Veröffentlichungsnummer: WO 2013/160218

(56) Entgegenhaltungen:
- EP-A2- 2 354 913
- GB-A- 2 480 777
- US-A1- 2010 161 090

## Beschreibung

Die vorliegende Erfindung betrifft ein Verfahren und eine Vorrichtung zum Visualisieren eines sortierbaren Datenbestands, insbesondere in einem Fahrzeug.

MobileGeräte der Unterhaltungselektronik, wie z. B. Geräte zur Wiedergabe von Audio- und/oder Videodateien, weisen mittlerweile Speicher auf, in denen sehr große Datenbestände gespeichert werden können. Beispielsweise können in mobilen Musikspielern mehrere tausend Musikstücke gespeichert werden. Bei solchen mobilen Geräten ergibt sich das Problem, wie der Nutzer auf diese großen Datenbestände einfach zugreifen kann. Zur Benutzerführung weisen die mobilen Geräte vielfach ein Display und eine Bedieneinrichtung auf. Die Bedieneinrichtung kann eine berührungsempfindliche Oberfläche des Displays umfassen oder ein von dem Display separates Bedienelement sein. Die in dem Gerät gespeicherten Datenbestände können zumindest zum Teil als Liste gespeichert sein, von der eine Teilmenge auf dem Display angezeigt werden kann. Mittels der Bedieneinrichtung kann der Nutzer durch die Liste serollen, um zu dem gewünschten Listeneintrag zu gelangen,

Des Weiteren ergibt sich auch bei der Informationsanzeige in einem Fahrzeug das Problem, dass sehr große Datenbestände im Fahrzeug visualisiert werden müssen. Moderne Fahrzeuge umfassen insbesondere Infotainmenteinrichtungen, Navigationssysteme und Fahrerassistenzsysteme, deren Informationen im Fahrzeug angezeigt werden müssen. Dabei ergeben sich bei der Anzeige von Information in einem Fahrzeug und für die Bedienung der vielfältigen Einrichtungen des Fahrzeugs sehr spezielle Anforderungen. Die Informationsaufnahme und die Bedienung erfolgt im Fahrzeug unter anderem durch den Fahrer. Die Informationen sollten somit im Fahrzeug so dargestellt werden, dass die Informationsaufnahme durch den Fahrer nicht zu einer Ablenkung während der Fahrt führt. Die dargestellten Informationen sollten daher intuitiv und schnell vom Fahrer erfassbar sein, so dass er für die Informationsaufnahme nur sehr kurzzeitig den Blick vom Fahrgeschehen abwenden muss. Gleichermaßen sollte die Bedienung der Fahrzeugeinrichtungen so einfach und Intuitiv wie möglich durchführbar sein, so dass der Fahrer die Einrichtungen auch während der Fahrt bedienen kann. Wird die Bedienung Von einer Anzeige unterstützt oder geführt, sollte die Anzeige so erfolgen, dass der Fahrer für die Bedienung nur sehr kurz die Anzeige betrachten muss, um die Bedienung durchzuführen.

Die Darstellung von Information in einem Fahrzeug erfolgt vielfach dadurch, dass eine Teilmenge einer Gesamtinformation auf der Anzeigefläche in dem Fahrzeug angezeigt wird und der Nutzer die Teilmenge verändern kann. Die Gesamtinformation kann beispielsweise eine Liste mit einer Vielzahl von Listeneinträgen betreffen. Von der Gesamtliste wird eine Teilmenge der Listeneinträge angezeigt. Durch einen Bedienvorgang kann der Nutzer einen Bildlauf (Scrollen) hervorrufen, um andere Listeneinträge zur Anzeige zu bringen. Bei dem Bedienvorgang kann der Nutzer beispielsweise eine Bedienbewegung einer bestimmten Länge ausführen. Ferner kann der Nutzer beispielsweise ein Bedienelement für eine bestimmte Bediendauer betätigen.

Enthält die Liste jedoch sehr viele Listeneinträge, ergibt sich das Problem, dass es sehr lange dauert, um zu einem Listeneintrag zu gelangen, der sehr weit entfernt von den angezeigten Listeneinträgen in der Liste eingeordnet ist. Dies ist jedoch, wie vorstehend erläutert, bei der Anwendung in einem Fahrzeug nachteilig.

Die DE 10 2008 052 485 A1 beschreibt ein Verfahren und eine Vorrichtung zum Anzeigen von in Listen geordneter Information, bei dem auf einer Anzeigefläche eine Teilmenge der Liste angezeigt wird, die eine Vielzahl an Listeneinträgen umfasst. Durch einen ersten Bedienvorgang können die Listeneinträge in der Liste nacheinander durchlaufen werden. Mittels eines zweiten Bedienvorgangs können mehrere Listeneinträge übersprungen werden, um zu einem Listeneintrag zu gelangen, der nicht in der zuvor angezeigten Teilmenge der Listeneinträge enthalten ist. Auf diese Weise kann z.B. bei einer alphabetisch sortierten Liste zum nächsten Anfangsbuchstaben gesprungen werden. Der erste und zweite Bedienvorgang sind insbesondere eine waagerechte beziehungsweise eine senkrechte Bediengeste auf einer berührungsempfindlichen Oberfläche.

Die DE 10 2009 019 563 A1 beschreibt ein Verfahren zum Anzeigen von in Listen geordneter Information, bei dem auf einer Anzeigefläche eine Teilmenge der Liste angezeigt wird, die eine Vielzahl von Listeneinträgen umfasst. Den Listeneinträgen sind zumindest zum Teil jeweils mehrere Elemente zugeordnet und die angezeigte Teilmenge der Liste ist durch einen Bildlauf-Bedienvorgang veränderbar, so dass nacheinander vorhergehende oder nachfolgende Listeneinträge anzeigbar sind. Bei einer Auswahl eines Listeneintrags wird dieser Listeneintrag zusammen mit zumindest einer Teilmenge der dem Listeneintrag zugeordneten Elemente angezeigt. Wenn ein ausgewählter Listeneintrag zusammen mit zumindest einer Teilmenge der dem ausgewählten Listeneintrag zugeordneten Elemente angezeigt wird und der Bildlauf-Bedienvorgang ausgeführt wird, werden zunächst nacheinander vorhergehende oder nachfolgende Elemente angezeigt und danach werden zu dem ausgewählten Listeneintrag vorhergehende oder nachfolgende Listeneinträge angezeigt.

Die DE 10 2009 010 830 A1 beschreibt ein Verfahren zum Anzeigen von Informationen in einem Fahrzeug, wobei die Informationen so strukturiert sind, dass zumindest zwei Menüebenen definiert sind, die jeweils Menüs enthalten, denen jeweils mehrere Objekte zugeordnet sind. Die Objekte des Menüs der zweiten Menüebene werden auf einem dreidimensional oder perspektivisch wiedergegebenen Drehrad angezeigt, wobei die Positionierung des Drehrads von der Position des dem Menü der zweiten Menüebene zugeordneten Objekts des Menüs der ersten Menüebene abhängt.

Die GB2480777 A beschreibt ein Verfahren und eine Vorrichtung zum Anzeigen von in Listen geordneter Information, bei dem auf einer Anzeigefläche eine Teilmenge der Liste angezeigt wird, die eine Vielzahl an Listeneinträgen umfasst.

Die US2010161090 A1 beschreibt ein Datenverwaltungssystem, bei dem eine Liste von einzelnen Titeln nach verschiedenen Sortierkriterien sortiert sowie gefiltert werden kann.

Es ist die Aufgabe der vorliegenden Erfindung, ein Verfahren und eine Vorrichtung zum Visualisieren eines sortierbaren Datenbestands bereitzustellen, mit denen auf einfache und für den Nutzer intuitive Weise eine Veränderung der angezeigten Teilmenge der Liste so erfolgen kann, dass der hierfür erforderliche Bedienvorgang so schnell wie möglich durchgeführt werden kann. Ferner soll dem Nutzer hierfür ein möglichst geringes Maß an Aufmerksamkeit abverlangt werden.

Diese Aufgabe wird durch ein Verfahren mit den Merkmalen des Anspruchs 1 sowie durch eine Vorrichtung mit den Merkmalen des Anspruchs 8 gelöst. Vorteilhafte Aus- und Weiterbildungen ergeben dich aus den abhängigen Ansprüchen.

Bei dem erfindungsgemäßen Verfahren zum Visualisieren eines hierarchisch sortierbaren Datenbestands wird der Datenbestand gemäß wenigstens einem Sortierkriterium hierarchisch sortiert und es wird eine Teilmenge des sortierten Datenbestands einer Hierarchieebene als graphische Liste angezeigt, deren Listeneinträge als graphische Objekte visualisiert werden.

Die Sortierung erfolgt z.B. in Abhängigkeit von einem automatischen Algorithmus und/oder einer Nutzerauswahl. Die angezeigte Teilmenge der Liste wird durch einen ersten Bedienvorgang derart verändert, dass durch den ersten Bedienvorgang die Listeneinträge der Liste innerhalb der ausgewählten Hierarchieebene nacheinander durchlaufen werden. Die angezeigte Teilmenge des sortierten Datenbestands wird durch einen zweiten Bedienvorgang, der sich vom ersten Bedienvorgang unterscheidet, derart verändert, dass die Hierarchieebene gewechselt wird und eine Teilmenge des sortierten Datenbestands der Hierarchieebene, in die gewechselt wurde, als graphische Liste dargestellt wird. Dabei unterscheiden sich die angezeigten graphischen Objekte einer tieferen Hierarchieebene von dem graphischen Objekt der dazugehörigen höheren Hierarchieebene. Insbesondere wird ein graphisches Objekt nicht durch das graphische Objekt des ersten Listeneintrags der darunterliegenden Hierarchieebene repräsentiert.

Bei dem erfindungsgemäßen Verfahren werden der erste Bedienvorgang und der zweite Bedienvorgang einmal oder mehrmals in beliebiger Reihenfolge hintereinander, d.h. gegebenenfalls auch abwechselnd, ausgeführt. Die Auswahl der Hierarchieebene wird anfangs insbesondere automatisch vorgegeben. Es wird beispielsweise immer mit der höchsten Hierarchieebene oder der zuletzt verwendeten Hierarchieebene begonnen. Im weiteren Verlauf des erfindungsgemäßen Verfahrens wird der Wechsel der Hierarchieebene dann nach Maßgabe des zweiten Bedienvorgangs bestimmt.

Die hierarchische Sortierung und das Navigieren durch den zweiten Bedienvorgang entlang den Hierarchieebenen ermöglicht einen schnellen Zugriff auf hierarchisch sortierte Datenbestände. Die graphische Repräsentation höherer Hierarchieebenen ohne Benutzung von "Stellvertretern" aus einer darunterliegenden Hierarchieebene erleichtert es dabei dem Nutzer, sich innerhalb der Hierarchiestruktur besser zurechtzufinden. Vorteilhafterweise sind deshalb die graphischen Objekte höherer Hierarchiestufen durch ein Visualisierungsmerkmal visuell differenziert.

Um dem Nutzer die visuelle Orientierung in der angezeigten Liste weiter zu erleichtern, ist in einer Ausgestaltung des erfindungsgemäßen Verfahrens vorgesehen, dass ein graphisches Objekt einer höheren Hierarchieebene einen visuellen Hinweis auf wenigstens zwei graphische Objekte einer dazugehörigen tieferen Hierarchieebene visualisiert. Das graphische Objekt der höheren Hierarchieebene umfasst z.B. eine Kollage des graphischen Inhalts der graphischen Objekte der tieferen Hierarchieebene. Alternativ oder auch zusätzlich ist das graphische Objekt der höheren Hierarchieebene animiert, d.h. zeitlich veränderlich, wobei graphische Inhalte einzelner graphischer Objekte der tieferen Hierarchieebene zeitlich nacheinander in das graphische Objekt der höheren Hierarchieebene aufgenommen werden. Durch solche Hinweise wird dem Nutzer der Inhalt der darunterliegenden Hierarchieebene verständlicher gemacht und die Gefahr, dass der Nutzer fehlgeleitet wird, verringert.

Nach einer Ausgestaltung des erfindungsgemäßen Verfahrens ist der Datenbestand nach wenigstens zwei Sortierkriterien einzeln oder in Kombination sortierbar. Dies ermöglicht eine flexiblere Suche durch Anpassung der hierarchischen Struktur an den gegebenen Kontext. Die Sortierkriterien können dabei wenigstens teilweise vom Nutzer vorgegeben werden, z.B. aus einer Liste ausgewählt werden. Alternativ oder auch zusätzlich können Sortierkriterien automatisch bestimmt werden, wenn z.B. aufgrund der Benutzungshistorie auf ein Nutzerverhalten geschlossen werden kann, welches eine bestimmte Art des Aufsuchens im Datenbestand favorisiert. Die hierarchische Sortierung kann auch in verschiedenen Hierarchiestufen nach unterschiedlichen Sortierkriterien erfolgen.

In einer Ausgestaltung des erfindungsgemäßen Verfahrens ist der Datenbestand in wenigstens einer ersten Hierarchieebene gemäß einem ersten Sortierkriterium hierarchisch sortiert und es wird ein Listeneintrag in einer der ersten Hierarchieebene untergeordneten Hierarchieebene ausgewählt. Ein dem Listeneintrag zugeordnetes Attribut, das mit einem zweiten Sortierkriterium assoziiert ist, wird ausgewählt und der Datenbestand wird wenigstens für die erste Hierarchieebene gemäß dem zweiten Sortierkriterium neu sortiert. Eine Teilmenge des sortierten Datenbestands der ersten Hierarchieebene wird dann als graphische Liste angezeigt. Diese Möglichkeit, im mehrdimensionalen Datenraum die Suchrichtung ändern zu können, beschleunigt in einigen Situationen den Suchvorgang erheblich. Der Nutzer muss den Suchvorgang nicht von vorne beginnen. Er kann den Suchvorgang insbesondere auf Basis eines Listeneintrags fortsetzen, zu dem ein bestimmtes Attribut einen erfolgversprechenden Suchansatz darstellt.

Nach einer Ausgestaltung des erfindungsgemäßen Verfahrens wird ein Listeneintrag und/oder ein einem Listeneintrag zugeordnetes Attribut durch einen dritten Bedienvorgang, der sich vom ersten und zweiten Bedienvorgang unterscheidet, ausgewählt. Durch die Auswahl eines Listeneintrags wird z.B. eine damit zugehörige Funktion ausgeführt. Durch die Auswahl eines einem Listeneintrag zugeordneten Attributs kann wie zuvor beschrieben eine hierarchische Neusortierung ausgelöst werden. Anders als durch den ersten und zweiten Bedienvorgang erfolgt durch den hierzu unterscheidbaren dritten Bedienvorgang keine Navigation im fest sortierten Datenbestand.

Es ist besonders intuitiv, wenn der erste und zweite Bedienvorgang je eine im Wesentlichen senkrecht zueinander verlaufende linear gerichtete Bedienbewegung parallel zu der Ebene der Anzeigefläche, auf der die graphische Liste angezeigt wird, umfasst und/oder wenn der dritte Bedienvorgang eine Zuzieh- oder Drückbewegung in Richtung des auszuwählenden Objekts umfasst. Der erste und zweite Bedienvorgang wird z.B. direkt auf der Anzeigefläche erfasst oder auf einer von der Anzeigefläche räumlich getrennten berührungsempfindlichen Bedienfläche. Hierdurch ist dem Nutzer intuitiv eine räumliche Korrelation der Bewegung seines Bedienvorgangs mit dem zu erzielenden Ergebnis des Bedienvorgangs verständlich. Insbesondere ist bei Listen mit nebeneinander angeordneten graphischen Objekten eine Bewegung nach oben, bei untereinander angeordneten graphischen Objekten eine Bewegung nach links für einen Wechsel in eine höhere Hierarchieebene intuitiv verständlich.

Der dritte Bedienvorgang kann dabei in beliebiger Reihenfolge abwechselnd mit dem ersten und zweiten Bedienvorgang mehrmals hintereinander ausgeführt werden, bis der Nutzer beim Navigieren durch Datenbestand den gesuchten Listeneintrag gefunden hat.

Gemäß einer Ausgestaltung des erfindungsgemäßen Verfahrens ist ein Listeneintrag automatisch vorausgewählt und es werden bei einem durch einen zweiten Bedienvorgang ausgeführten Wechsel in eine tiefere Hierarchieebene Listeneinträge angezeigt, die dem vorausgewählten Listeneintrag hierarchisch untergeordnet sind. Eine automatische Vorauswahl umfasst, dass ohne Nutzereingabe implizit ein Listeneintrag in der angezeigten Liste ausgewählt ist, z.B. durch die Position, in welcher der betreffende Listeneintrag gerade angezeigt wird. Hierdurch wird ein weiterer Bedienschritt gespart und der gesamte Bedienablauf verkürzt. Zweckmäßigerweise ist dieser automatisch oder implizit ausgewählte Listeneintrag z.B. der erste, d.h. bei einer horizontalen Anordnung der am weitesten links oder bei einer vertikalen Anordnung der am obersten angezeigte Listeneintrag. Alternativ ist der Listeneintrag vorausgewählt, der gerade mittig auf der Anzeigefläche dargestellt wird. Letztere Wahl ist insbesondere dann vorteilhaft, wenn mit dem ersten Bedienvorgang die neu erscheinenden graphischen Objekte mit fortschreitendem Durchblättern bis zu einer zentralen Anzeigeposition kontinuierlich hervorgehoben werden und bei noch weiterem Durchblättern wieder weniger prominent erscheinen. Eine solche kontinuierliche Hervorhebung wird z.B. durch Vergrößerung des graphischen Objekts oder durch eine Änderung der Perspektive erreicht, indem das graphische Objekt wie ein Blatt aufgeklappt und hochgeklappt wird. Der vorausgewählte Listeneintrag kann dabei visuell hervorgehoben werden, damit der Nutzer nicht im Zweifel ist, in welche untergeordnete Hierarchieebene er in der betreffenden Situation mit einem zweiten Bedienvorgang wechseln würde.

In einer weiteren Ausgestaltung des erfindungsgemäßen Verfahrens ist vorgesehen, dass die Auswahl der angezeigten Teilmenge der Hierarchieebene, in die gewechselt wurde, in Abhängigkeit von einem zuvor bestimmten Parameter erfolgt. Der Parameter bestimmt dabei insbesondere den Anfangspunkt und den Endpunkt der noch anzuzeigenden Listeneinträge der neu ausgewählten Hierarchieebene. Die Auswahl beginnt typischerweise beim ersten Listeneintrag der betreffenden Hierarchieebene. Es kann dabei aber zusätzlich die Benutzungshistorie ausgewertet werden und bei der Wahl der anzuzeigenden Teilmenge berücksichtigt werden. Beispielsweise wird ausgewertet, welche Listeneinträge ein Nutzer zuvor schon einmal ausgewählt hatte. Auf diese Weise kann im Wiederholungsfall gegebenenfalls der erste Bedienvorgang verkürzt oder sogar entbehrlich werden.

Der Datenbestand umfasst vorteilhafterweise eine Musiksammlung, eine Videosammlung, eine Zieladressenkartei, eine Personenkartei, ein Telefonbuch, ein Benutzermenü und/oder eine Geräte-Inventarliste. Diese Datenbestände werden typischerweise in einem Fahrzeug benötigt, um diverse Steuerungs-, Kommunikations- und Unterhaltungsfunktionen aufzurufen und durchzuführen. Die Verwendung des erfindungsgemäßen Verfahrens in einem Fahrzeug ist dabei aus den bereits genannten Gründen besonders vorteilhaft, weil die Dauer eines Bedienvorgangs möglichst kurz gehalten werden kann.

Die erfindungsgemäße Vorrichtung zum Visualisieren eines hierarchisch sortierbaren Datenbestands, insbesondere in einem Fahrzeug, umfasst eine Schnittstelle zum Empfangen eines Datenbestands, Mittel zum Erfassen von wenigstens zwei verschiedenen Bedienvorgängen sowie eine Anzeigefläche zum Anzeigen einer graphischen Liste, deren Listeneinträge als graphische Objekte visualisierbar sind. Sie umfasst des Weiteren eine Steuereinheit, die mit der Schnittstelle zum Empfangen des Datenbestands, den Mitteln zum Erfassen der Bedienvorgänge und der Anzeigefläche verbunden ist, wobei mittels der Steuereinheit die auf der Anzeigefläche angezeigte graphische Liste in Abhängigkeit von den verschiedenen Bedienvorgängen steuerbar ist. Die erfindungsgemäße Vorrichtung ist dadurch gekennzeichnet, dass mittels der Steuereinheit der Datenbestand gemäß wenigstens einem Sortierkriterium hierarchisch sortierbar ist, wobei eine Teilmenge des sortierten Datenbestands einer Hierarchieebene als graphische Liste auf der Anzeigefläche anzeigbar ist. Ferner ist mittels der Steuereinheit die Anzeigefläche derart steuerbar, dass die angezeigte Teilmenge der Liste derart veränderbar ist, dass auf die Erfassung eines ersten Bedienvorgangs die Listeneinträge der Liste innerhalb der ausgewählten Hierarchieebene nacheinander durchlaufen werden, und dass auf die Erfassung eines zweiten Bedienvorgang, der sich vom ersten Bedienvorgang unterscheidet, die angezeigte Teilmenge des sortierten Datenbestands derart veränderbar ist, dass die Hierarchieebene gewechselt wird und eine Teilmenge des sortierten Datenbestands der Hierarchieebene, in die gewechselt wurde, als graphische Liste dargestellt wird, wobei sich die angezeigten graphischen Objekte einer tieferen Hierarchieebene von dem graphischen Objekt der dazugehörigen höheren Hierarchieebene unterscheiden. Die erfindungsgemäße Vorrichtung ist insbesondere geeignet zum Durchführen des erfindungsgemäßen Verfahrens. Sie weist somit auch die Vorteile des erfindungsgemäßen Verfahrens auf.

Erfindungsgemäß ist ein Fahrzeug mit einer solchen Vorrichtung zum Visualisieren eines hierarchisch sortierbaren Datenbestands ausgestattet.

Die Erfindung wird nun anhand von Ausführungsbeispielen mit Bezug zu den Figuren näher erläutert.
- Figur 1: zeigt das Cockpit eines Fahrzeugs, das mit einer Vorrichtung zum Visualisieren eines hierarchisch sortierbaren Datenbestands gemäß einem Ausführungsbeispiel der Erfindung ausgestattet ist,
- Figur 2: zeigt schematisch den Aufbau einer Vorrichtung zum Visualisieren eines hierarchisch sortierbaren Datenbestands gemäß einem Ausführungsbeispiel der Erfindung,
- die Figuren 3-5: zeigen graphische Objekte einer hierarchisch sortierten Liste, deren angezeigte Teilmenge gemäß einem Ausführungsbeispiel des erfindungsgemäßen Verfahrens veränderbar ist,
- die Figuren 6-7: zeigen graphische Objekte als sogenannte Meta-Cover gemäß einem Ausführungsbeispiel der Erfindung und
- Figur 8: zeigt schematisch ein graphisches Objekt eines Listeneintrags, zu dem gemäß einem Ausführungsbeispiel der Erfindung ein mit einem Sortierkriterium assoziiertes Attribut ausgewählt wird.

Das im Folgenden beschriebene Ausführungsbeispiel betrifft eine Vorrichtung und ein Verfahren zum Visualisieren eines hierarchisch sortierbaren Datenbestands in einem Fahrzeug. Die Erfindung kann jedoch auf gleiche Weise in einem mobilen oder stationären Gerät der Unterhaltungselektronik, insbesondere einem Gerät zur Wiedergabe von Audio- und Videodateien, eingesetzt werden.

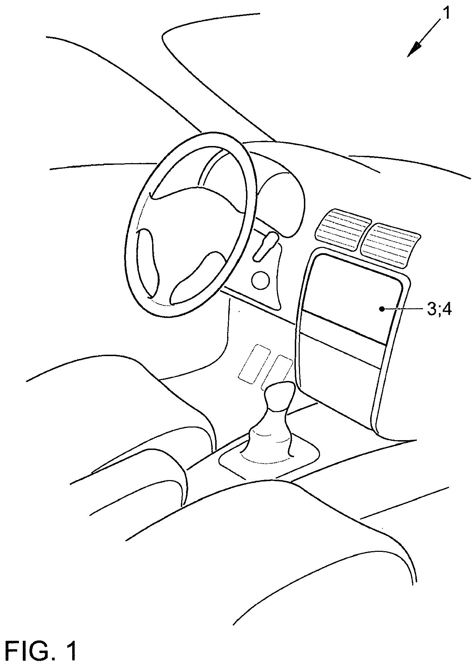

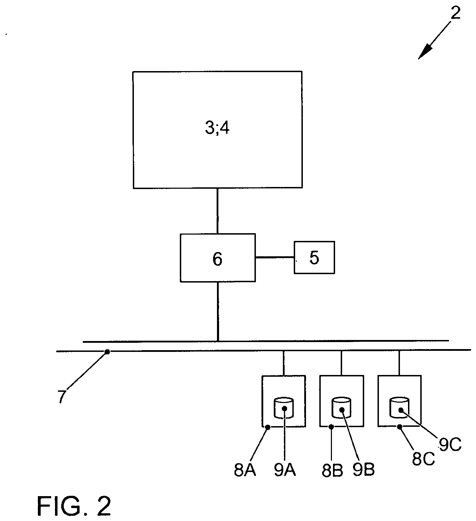

In der Figur 1 ist das Cockpit eines Fahrzeugs 1 dargestellt, in dem die Vorrichtung 2 (siehe Figur 2) zum Visualisieren eines hierarchisch sortierbaren Datenbestands gemäß einem Ausführungsbeispiel der Erfindung angeordnet ist. Die Vorrichtung 2 umfasst dazu ein Display 3 insbesondere zur grafischen Darstellung graphischer Listen. Bei dem Display 3 kann es sich um ein beliebiges nach dem Stand der Technik bekanntes und für diesen Zweck geeignetes Display handeln, welches an einer zentralen Position im Cockpit, z.B. im oberen Bereich der Mittelkonsole, angeordnet ist.

Das Display 3 ist vorzugsweise mit einer berührungsempfindlichen Oberfläche 4 ausgestattet, über welche verschiedene Bediengesten G1 - G3 erfassbar sind, wie dies weiter unten im Zusammenhang mit dem erfindungsgemäßen Verfahren noch näher erläutert wird. Anstelle der berührungsempfindlichen Oberfläche 4 können auch andere Eingabemittel vorgesehen sein, z.B. diverse Bedientasten (nicht dargestellt) oder ein an sich bekanntes Touchpad 5, bei dem eine berührungsempfindliche Oberfläche räumlich getrennt vom Display 3 bereitgestellt wird, z.B. in einem unteren Bereich der Mittelkonsole in der Nähe des Schaltknüppels, sodass die Bediengesten vom Fahrer mit abgestütztem Arm leichter durchzuführen sind.

Die graphischen Listen werden aus Datenbeständen 9A - 9C diverser Funktionseinrichtungen 8A - 8C im Fahrzeug 1 dadurch erzeugt, dass die Datenbeständen 9A - 9C oder eine Teilmenge davon nach einem oder mehreren Sortierkriterien hierarchisch sortiert werden und nach Maßgabe von den verschiedenen Bediengesten G1 - G3 einzelne Teilmengen einer Hierarchieebene als graphische Liste dargestellt werden, wie dies weiter unten im Zusammenhang mit dem erfindungsgemäßen Verfahren noch näher erläutert wird. Die Funktionseinrichtungen 8A - 8C sind im gezeigten Fall eine Infotainmenteinrichtung 8A, eine Fahrerassistenzeinrichtung 8B sowie ein Kommunikationseinrichtung 8C. Der Datenbestand 9A der Infotainmenteinrichtung 8A umfasst eine Musiksammlung, der Datenbestand 9B der Fahrerassistenzeinrichtung 8B umfasst eine Zieladressenkartei und der Datenbestand 9C der Kommunikationseinrichtung umfasst eine Personenkartei und ein Telefonbuch.

Die Vorrichtung 2 umfasst des Weiteren eine Steuereinheit 6, die mit dem Display 3 mit der berührungsempfindlichen Oberfläche 4 und ggf. dem Touchpad 5 verbunden ist, wobei mittels der Steuereinheit 6 die auf dem Display 3 angezeigte graphische Liste in Abhängigkeit von den verschiedenen Bediengesten G1 - G3 steuerbar ist. Dazu werden die Bediengeste G1 - G3 über die berührungsempfindliche Oberfläche 4 bzw. das Touchpad 5 erfasst und dazugehörige Daten, z.B. die zeitlich aufgelösten Berührungskoordinaten der jeweiligen Bediengeste G1 - G3, an die Steuereinheit 6 übermittelt. In der Steuereinheit 6 werden diese Daten ausgewertet und einer Bediengeste G1 - G3 zugeordnet.

Die Steuereinheit 6 ist ferner mit dem Datenbus 7 des Fahrzeugs 1 verbunden, um darüber auf die Datenbestände 9A-9C zugreifen zu können.

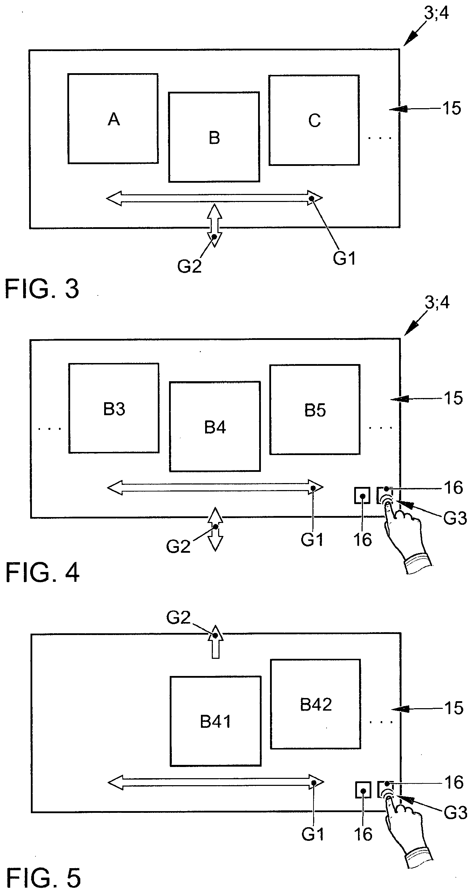

Das erfindungsgemäße Verfahren wird nun anhand eines Ausführungsbeispiels mit Bezug zu den Figuren 3-8 näher erläutert. Dazu kann insbesondere die mit Bezug zu den Figuren 1 - 2 beschriebene Vorrichtung 2 verwendet werden, auf die sich im Folgenden auch explizit bezogen wird.

Zunächst wird eine Teilmenge des Datenbestands 9A - 9C festgelegt. Dies erfolgt z.B. kontextabhängig, indem der Nutzer, insbesondere der Fahrer des Fahrzeugs 1, zuvor durch an sich bekannte Bedienvorgänge einen spezifischen Nutzungskontext hergestellt hat. Das Verfahren wird stellvertretend am Beispiel des Navigierens in einer großen Menge von Musiktiteln, die in der Infotainmenteinrichtung 8A gespeichert sind, beschrieben. Der Nutzer hat die Infotainmenteinrichtung 8A aktiviert und beginnt mit der Suche eines Musiktitels.

Der Datenbestand 9A umfasst mehrere Tausend Musiktitel und wird gemäß wenigstens einem Sortierkriterium hierarchisch sortiert. Die Musiktitel werden z.B. alphabetisch nach dem Musiktitel selber oder nach dem Musikgenre, der Musikgruppe, dem Komponisten bzw. dem Interpreten, dem zugehörigen Album oder dem Erscheinungsjahr sortiert. Es ist auch eine Sortierung nach mehreren Sortierkriterien möglich, z.B. eine Sortierung nach dem Genre in der ersten Hierarchieebene, eine alphabetische Sortierung nach den Interpreten/ Musikgruppen in der zweiten und dritten Hierarchieebene und ggf. weiteren Sortierungen in weiteren Hierarchieebenen.

Im Gezeigten Beispiel gemäß der Figur 3 erfolgt die Sortierung in der ersten Hierarchieebene alphabetisch nach den Musikgruppen/ Interpreten und es wird eine Teilmenge des sortierten Datenbestands 9A dieser Hierarchieebene als graphische Liste 15 angezeigt. Im gezeigten Fall werden dem Nutzer drei nebeneinander angeordnete graphische Objekte A - C als Listeneinträge angezeigt. Je nach Ausführungsform kann diese Anzahl variieren. Sie richtet sich z.B. nach der Größe des Displays 3 oder nach der Darstellungsart der graphischen Objekte. Im gezeigten Fall werden die graphischen Objekte als flache quadratische Strukturen dargestellt, die den Hüllen der Musiktonträger (sogenannte "Cover") wenigstens teilweise nachempfunden sind.

Der Nutzer hat nun die Möglichkeit, die angezeigte Teilmenge der Liste durch eine erste Bediengeste G1 derart zu verändern, dass durch diese erste Bediengeste G1 die Listeneinträge der Liste 15 innerhalb der ausgewählten Hierarchieebene nacheinander durchlaufen werden. Die Bediengeste G1 besteht aus einer waagerechten Wischgeste, die der Nutzer auf der berührungsempfindlichen Oberfläche 4 des Displays 3 oder alternativ auf dem Touchpad 5 durchführt. Die zu der Bediengeste G1 gehörigen Daten werden an die Steuereinheit 6 übermittelt, in der die Bediengeste G1 erkannt wird.

In der Steuereinheit 6 werden Steuerbefehle erzeugt, dass die Graphikdaten der graphischen Objekte für die Listeneinträge gemäß einem horizontalen Bildlauf verändert werden. Eine Bewegung nach links löst dabei einen Bildlauf nach links aus, d.h. zu den noch nicht dargestellten Buchstaben D, E, usw. Eine Bewegung nach rechts löst einen entsprechend entgegensetzten Bildlauf aus, d.h. dass die noch nicht angezeigten Anfangsbuchstaben Z, Y, usw. angezeigt werden (nicht dargestellt).

Hat der Nutzer nun einen geeigneten Listeneintrag als übergeordneten Einstiegspunkt in der ersten Hierarchieebene gefunden, so führt der die Bediengeste G1 so aus, dass das zugeordnete graphische Objekt, in diesem Fall das mittig angezeigte graphische Objekt B, vorausgewählt ist. Die Vorauswahl wird dem Nutzer durch eine leichte Einrückung nach unten visualisiert. In anderen Ausführungsformen ist z.B. das am weitesten links angezeigte graphische Objekt implizit ausgewählt (nicht dargestellt). Alternativ kann der Nutzer das graphische Objekt B auch separat auswählen, wenn es irgendwo auf dem Display 3 zur Anzeige kommt.

Zur weiteren Suche kann der Nutzer nun die angezeigte Teilmenge des sortierten Datenbestands 9A durch eine zweiten Bediengeste G2 derart verändern, dass er in eine untergeordnete tiefere Hierarchieebene wechselt und eine Teilmenge des sortierten Datenbestands 9A dieser untergeordneten Hierarchieebene als graphische Liste 15 dargestellt wird, wie dies in der Figur 4 dargestellt ist.

Die Bediengeste G2 besteht aus einer senkrechten Wischgeste nach unten, die der Nutzer auf der berührungsempfindlichen Oberfläche 4 des Displays 3 oder alternativ auf dem Touchpad 5 durchführt. Die zu der Bediengeste G2 gehörigen Daten werden wiederum an die Steuereinheit 6 übermittelt, in der die Bediengeste G2 erkannt wird.

In der Steuereinheit 6 werden Steuerbefehle erzeugt, so dass die Graphikdaten der graphischen Objekte B3 - B5 für die Listeneinträge der darunterliegenden Hierarchieebene erzeugt werden. In tieferen Hierarchieebenen ist auch der umgekehrte Fall einer senkrechten Wischgeste nach oben möglich, durch welche entsprechend in die höhere Hierarchieebene zurückgewechselt wird.

Beim Wechsel in eine tiefere Hierarchieebene wird die anzuzeigende Teilmenge automatisch vorbestimmt. Typischerweise besitzt die Liste 15 in der tieferen Hierarchieebene eine Initialisierung, d.h. einen Startpunkt, und die anzuzeigende Teilmenge wird nach diesem Startpunkt ausgerichtet. Im gezeigten Fall erfolgte die Auswahl der angezeigten Teilmenge der Hierarchieebene, in die gewechselt wurde, jedoch in Abhängigkeit von der vorherigen Nutzungshistorie. Um ein möglichst schnelles Auffinden des gesuchten Musiktitels zu ermöglichen, wird dabei berücksichtigt, ob und unter welchen Umständen der Nutzer einen oder mehrere Listeneinträge in dieser Hierarchieebene schon einmal ausgewählt hatte. Handelt es sich z.B. um ein bevorzugtes Musikalbum, so ist mit einer erhöhten Wahrscheinlichkeit davon auszugehen, dass auch bei der vorliegenden Suche ein Musiktitel aus diesem Musikalbum gesucht wird. Beim Wechsel in die niedrigere Hierarchieebene wurde in diesem Fall das graphische Objekt B4 mittig angezeigt und auch implizit ausgewählt.

Der Nutzer kann nun gemäß der Bediengesten G1 und G2 wie zuvor beschrieben weiter in dem hierarchisch sortierten und visualisierten Datenbestand 9A navigieren. Er kann beispielsweise durch eine erneute Bediengeste G2 eine weitere Hierarchieebene nach unten wechseln, wie dies in der Figur 5 dargestellt ist, woraufhin ihm die Liste 15 mit den graphischen Objekten B41, B42 angezeigt wird. Falls er in der tiefsten Hierarchieebene angelangt ist, wird eine Bediengeste G2 nur noch als Wischgeste nach oben zugelassen.

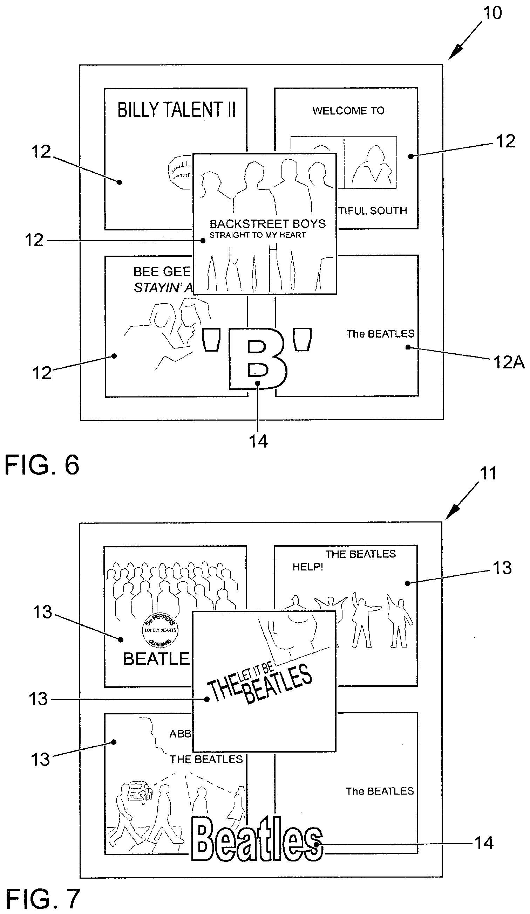

In den Figuren 6 und 7 sind graphische Objekte 10, 11 als sogenannte Meta-Cover gemäß einem Ausführungsbeispiel der Erfindung dargestellt. Das Meta-Cover 10 wird beispielsweise für das graphische Objekt B aus der Figur 3 verwendet. Das Meta-Cover 11 wird beispielsweise für das graphische Objekt B4 aus der Figur 4 verwendet.

Dem Nutzer soll nun einerseits eine möglichst gute Orientierung bezüglich der gewählten Hierarchieebene geboten werden, andererseits aber auch ein möglichst guter Überblick über den tieferliegenden Inhalt unterhalb der gewählten Hierarchieebene. Dabei ist insbesondere zu berücksichtigen, dass der Nutzer ggf. schon kreuz und quer durch den Datenbestand 9A navigiert hat.

Die angezeigten graphischen Objekte der tieferen Hierarchieebene, zu der hier nur das Meta-Cover 11 gezeigt ist, unterscheiden sich dabei von dem zu der höheren Hierarchieebene gehörigen Meta-Cover 10. Der Nutzer erkennt damit leichter, in welcher Hierarchieebene er sich befindet. Das Meta-Cover 10 umfasst dabei graphische Hinweise 12, 12A auf die Inhalte der darunterliegenden Hierarchieebene. Diese graphischen Hinweise 12, 12A umfassen eine Kollage der Meta-Cover der darunterliegenden Hierarchieebene. Der graphische Hinweis 12A entspricht dabei weitgehend dem Meta-Cover 11. Das Meta-Cover 11 ist seinerseits so aufgebaut, dass es graphische Hinweise 13 auf den Inhalt der darunterliegenden Hierarchieebene umfasst. Ferner sind auf den Meta-Cover 10, 11 jeweils Textfelder 14 vorgesehen, über die weitere Texthinweise zum Inhalt des betreffenden Objekts und den dazu untergeordneten Objekten bereitgestellt werden.

In vielen Suchsituationen kommt es vor, dass der Nutzer die hierarchische Einteilung ändern möchte. Der Nutzer findet die vorgenommene Einteilung beispielsweise unzweckmäßig. Andererseits kann er während des Suchens auch auf Hinweise gestoßen sein, wie er durch eine verfeinerte Suche ggf. den Sucherfolg verbessern kann. Als Ausgangssituation ist der Datenbestand im gezeigten Fall in der oder den obersten Hierarchieebene(n) alphabetisch sortiert. Wie in den Figuren 4 und 5 dargestellt, werden dazu in den unteren Hierarchieebenen noch Auswahlfelder 16 angezeigt, welche mittels einer dritten Bediengeste G3 auswählbar sind, z.B. durch Antippen oder eine mit mehreren Fingern ausgeführte Zuziehgeste. Mittels der Auswahlfelder 16 kann der Nutzer die Suchrichtung ausgehend von der gewählten Hierarchieebene oder auch für den ganzen Datenbestand 9A neu festlegen. Er wählt mit einem der Auswahlfelder 16 beispielsweise eine von dieser Hierarchieebene abwärts geltende chronologischen Sortierung, wobei ihm dann eine entsprechend geänderte Liste angezeigt wird (nicht dargestellt).

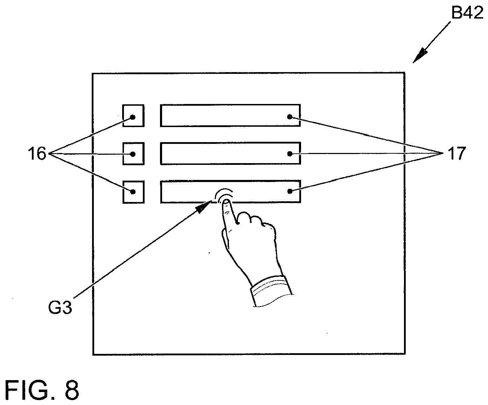

Ferner hat der Nutzer nun die Möglichkeit, einen Listeneintrag in einer untergeordneten Hierarchieebene, z.B. durch eine Bediengeste G3, auszuwählen. Der ausgewählte Listeneintrag, der durch das graphische Objekt B42 repräsentiert wird, ist in der Figur 8 dargestellt. Ihm werden nach der Auswahl weitere Details zu dem ausgewählten Objekt B42 angezeigt, insbesondere Attribute und damit assoziierte Sortierkriterien wie "Musikgruppe = Beatles", "Erscheinungsjahr des Albums = 1966" oder "Musikgenre = Rock & Pop". Er hat nun die Möglichkeit, ein mit einem neuen Suchkriterium assoziiertes Attribut, z.B. Erscheinungsjahr, auszuwählen, woraufhin der Datenbestand 9A gemäß den Erscheinungsjahren neu sortiert wird. Für die erste Hierarchieebene wird sodann eine Teilmenge des so neu sortierten Datenbestands 9A als graphische Liste angezeigt. Dabei kann die Liste vorzugsweise um den Attributwert, also hier das Erscheinungsjahr 1966 des Musikalbums, das durch das Objekt 42 repräsentiert wird, zentriert angezeigt werden.

### Bezugszeichenliste

- 1: Fahrzeug
- 2: Vorrichtung zum Visualisieren eines hierarchisch sortierten Datenbestands
- 3: Display
- 4: berührungsempfindliche Oberfläche
- 5: Touchpad
- 6: Steuereinheit
- 7: Datenbus im Fahrzeug
- 8A-8C: Funktionseinheiten
- 9A - 9C: Datenbestände
- 10, 11: graphische Objekte
- 12, 12A, 13: graphische Hinweise
- 14: Textfeld
- 15: graphische Liste
- 16: Auswahlfelder
- 17: Attribut
- A - C: graphische Objekte
- B3 - B5: graphische Objekte
- B41, B42: graphische Objekte
- G1 - G3: Bediengesten

## Patentansprüche

1. Verfahren zum Visualisieren eines hierarchisch sortierbaren Datenbestands (9A; 9B; 9C), insbesondere in einem Fahrzeug (1), bei dem
- der Datenbestand (9A; 9B; 9C) gemäß wenigstens einem Sortierkriterium hierarchisch sortiert wird,
- eine Teilmenge des sortierten Datenbestands einer Hierarchieebene als graphische Liste (15) angezeigt wird, deren Listeneinträge als graphische Objekte (A - C; B3 - B5; B41 - B42) visualisiert werden,
- die angezeigte Teilmenge der Liste (15) durch einen ersten Bedienvorgang (G1) derart verändert wird, dass durch den ersten Bedienvorgang (G1) die Listeneinträge der Liste (15) innerhalb der ausgewählten Hierarchieebene nacheinander durchlaufen werden, und
- die angezeigte Teilmenge des sortierten Datenbestands (9A; 9B; 9C) durch einen zweiten Bedienvorgang (G2), der sich vom ersten Bedienvorgang (G1) unterscheidet, derart verändert wird, dass die Hierarchieebene gewechselt wird und eine Teilmenge des sortierten Datenbestands (9A; 9B; 9C) der Hierarchieebene, in die gewechselt wurde, als graphische Liste (15) dargestellt wird, wobei sich die angezeigten graphischen Objekte (B3 - B5; B41 - B42) einer tieferen Hierarchieebene von dem graphischen Objekt (B; B4) der dazugehörigen höheren Hierarchieebene unterscheiden, wobei
- der Datenbestand (9A; 9B; 9C) nach wenigstens zwei Sortierkriterien einzeln oder in Kombination sortierbar ist und
- der Datenbestand (9A; 9B; 9C) in wenigstens einer ersten Hierarchieebene gemäß einem ersten Sortierkriterium hierarchisch sortiert ist,
**dadurch gekennzeichnet, dass**
- der Datenbestand gemäß einem zweitem Sortierkriterium hierarchisch sortiert wird, wenn
- ein Listeneintrag (B42) in einer der ersten Hierarchieebene untergeordneten Hierarchieebene ausgewählt wird, und
- ein dem Listeneintrag (B42) zugeordnetes Attribut (17) ausgewählt wird, das mit dem zweiten Sortierkriterium assoziiert ist,
- woraufhin der Datenbestand (9A; 9B; 9C) wenigstens für die erste Hierarchieebene gemäß dem zweiten Sortierkriterium neu sortiert wird und
- sodann eine Teilmenge des sortierten Datenbestands (9A; 9B; 9C) der ersten Hierarchieebene als graphische Liste (15) angezeigt wird.

2. Verfahren nach Anspruch 1,
**dadurch gekennzeichnet,**
**dass** ein graphisches Objekt (10) einer höheren Hierarchieebene einen visuellen Hinweis (12, 12A) auf wenigstens zwei graphische Objekte (11) einer dazugehörigen tieferen Hierarchieebene visualisiert.

3. Verfahren nach einem der vorangegangenen Ansprüche,
**dadurch gekennzeichnet,**
**dass** ein Listeneintrag (B42) und/oder ein einem Listeneintrag (B42) zugeordnetes Attribut (17) durch einen dritten Bedienvorgang (G3), der sich vom ersten und zweiten Bedienvorgang (G1, G2) unterscheidet, ausgewählt wird.

4. Verfahren nach einem der vorangegangenen Ansprüche,
**dadurch gekennzeichnet, dass**
- der erste und zweite Bedienvorgang (G1, G2) je eine im Wesentlichen senkrecht zueinander verlaufende linear gerichtete Bedienbewegung parallel zu der Ebene der Anzeigefläche (3), auf der die graphische Liste angezeigt wird, umfasst und/oder
- der dritte Bedienvorgang (G3) eine Zuzieh- oder Drückbewegung in Richtung des auszuwählenden Objekts (B42; 17) umfasst.

5. Verfahren nach einem der vorangegangenen Ansprüche,
**dadurch gekennzeichnet, dass**
- ein Listeneintrag (B; B4) automatisch vorausgewählt ist und
- bei einem durch einen zweiten Bedienvorgang (G2) ausgeführten Wechsel in eine tiefere Hierarchieebene Listeneinträge (B3 - B5; B41 - B42) angezeigt werden, die dem vorausgewählten Listeneintrag (B; B4) hierarchisch untergeordnet sind.

6. Verfahren nach einem der vorangegangenen Ansprüche,
**dadurch gekennzeichnet,**
**dass** die Auswahl der angezeigten Teilmenge der Hierarchieebene, in die gewechselt wurde, in Abhängigkeit von einem zuvor bestimmten Parameter erfolgt.

7. Verfahren nach einem der vorangegangenen Ansprüche,
**dadurch gekennzeichnet,**
**dass** der Datenbestand (9A; 9B; 9C) eine Musiksammlung, eine Videosammlung, eine Zieladressenkartei, eine Personenkartei, ein Telefonbuch, ein Benutzermenü und/oder eine Geräte-Inventarliste umfasst.

8. Vorrichtung (2) zum Visualisieren eines hierarchisch sortierbaren Datenbestands (9A; 9B; 9C), insbesondere in einem Fahrzeug (1), umfassend
- eine Schnittstelle (7) zum Empfangen eines Datenbestands (9A; 9B; 9C),
- Mittel (4; 5) zum Erfassen von wenigstens zwei verschiedenen Bedienvorgängen (G1 -G3),
- eine Anzeigefläche (3) zum Anzeigen einer graphischen Liste (15), deren Listeneinträge als graphische Objekte (A - C; B3 - B5; B41 - B42) visualisierbar sind, und
- eine Steuereinheit (6), die mit der Schnittstelle (7) zum Empfangen des Datenbestands (9A; 9B; 9C), den Mitteln (4; 5) zum Erfassen der Bedienvorgänge (G1 - G3) und der Anzeigefläche (3) verbunden ist, wobei mittels der Steuereinheit (6) die auf der Anzeigefläche (3) angezeigte graphische Liste (15) in Abhängigkeit von den verschiedenen Bedienvorgängen (G1 - G3) steuerbar ist, wobei mittels der Steuereinheit (6)
- der Datenbestand (9A; 9B; 9C) gemäß wenigstens einem Sortierkriterium hierarchisch sortierbar ist, wobei eine Teilmenge des sortierten Datenbestands (9A; 9B; 9C) einer Hierarchieebene als graphische Liste (15) auf der Anzeigefläche (3) anzeigbar ist, und
- die Anzeigefläche (3) derart steuerbar ist, dass die angezeigte Teilmenge der Liste (15) derart veränderbar ist, dass auf die Erfassung eines ersten Bedienvorgangs (G1) die Listeneinträge der Liste (15) innerhalb der ausgewählten Hierarchieebene nacheinander durchlaufen werden, und dass auf die Erfassung eines zweiten Bedienvorgang (G2), der sich vom ersten Bedienvorgang (G1) unterscheidet, die angezeigte Teilmenge des sortierten Datenbestands (9A; 9B; 9C) derart veränderbar ist, dass die Hierarchieebene gewechselt wird und eine Teilmenge des sortierten Datenbestands (9A; 9B; 9C) der Hierarchieebene, in die gewechselt wurde, als graphische Liste (15) dargestellt wird, wobei sich die angezeigten graphischen Objekte (B3 - B5; B41 - B42) einer tieferen Hierarchieebene von dem graphischen Objekt (B; B3 - B5) der dazugehörigen höheren Hierarchieebene unterscheiden, wobei
- der Datenbestand (9A; 9B; 9C) nach wenigstens zwei Sortierkriterien einzeln oder in Kombination sortierbar ist, wobei
die Vorrichtung (2) ferner dazu eingerichtet ist, dass
- der Datenbestand (9A; 9B; 9C) in wenigstens einer ersten Hierarchieebene gemäß einem ersten Sortierkriterium hierarchisch sortiert ist,
**dadurch gekennzeichnet, dass**
- die Anzeigefläche derart steuerbar ist, dass, wenn
- ein Listeneintrag (B42) in einer der ersten Hierarchieebene untergeordneten Hierarchieebene ausgewählt wird, und
- ein dem Listeneintrag (B42) zugeordnetes Attribut (17) ausgewählt wird, das mit einem zweiten Sortierkriterium assoziiert ist,
- der Datenbestand (9A; 9B; 9C) wenigstens für die erste Hierarchieebene gemäß dem zweiten Sortierkriterium neu sortiert wird und
- eine Teilmenge des sortierten Datenbestands (9A; 9B; 9C) der ersten Hierarchieebene als graphische Liste (15) angezeigt wird.

## Claims

1. A method for visualizing a hierarchically sortable database (9A; 9B; 9C), in particular in a vehicle (1) in which
- the database (9A; 9B; 9C) is hierarchically sorted according to at least one sorting criterion,
- a partial quantity of the sorted database of one hierarchy level is displayed as a graphic list (15), the list entries of which are visualized as graphic objects (A - C; B3 - B5; B41 - B42),
- the partial quantity displayed of the list (15) is modified by a first operating process (G1) in such a manner that the list entries of the list (15) are run through by the first operating process (G1) one after another within the selected hierarchy level, and
- the partial quantity displayed of the sorted database (9A; 9B; 9C) is modified by a second operating process (G2), which differs from the first operating process (G1) in such a manner that the hierarchy level is changed and a partial quantity of the sorted database (9A; 9B; 9C) of the hierarchy level, into which it was changed, is displayed as a graphic list (15), wherein the graphic objects (B3 - B5; B41 - B42) of a lower hierarchy level differ from the graphic object (B; B4) of the associated higher hierarchy level, wherein
- the database (9A; 9B; 9C) can be sorted according to at least two sorting criterion individually or in combination and
- the database (9A; 9B; 9C) is hierarchically sorted in at least a first hierarchy level according to a first sorting criterion,
**characterized in that**
- the database is hierarchically sorted according to a second sorting criterion, if
- a list entry (B42) in a hierarchy level subordinate to the first hierarchy level is selected, and
- an attribute (17) associated with the list entry (B42) is selected, which is associated with the second sorting criterion,
- whereupon the database (9A; 9B; 9C) is re-sorted at least for the first hierarchy level according to the second criterion and
- then a partial quantity of the sorted database (9A; 9B; 9C) of the first hierarchy level is displayed as a graphic list (15).

2. The method according to Claim 1,
**characterized in**
**that** a graphic object (10) of a higher hierarchy level visualizes a visual reference (12, 12A) to at least two graphic objects (11) of an associated lower hierarchy level.

3. The method according to any one of the preceding claims,
**characterized in**
**that** a list entry (B42) and/or an attribute (17) associated with a list entry (B42) is selected by a third operating process (G3), which differs from the first and second operating process (G1, G2).

4. The method according to any one of the preceding claims,
**characterized in that**
- the first and second operating process (G1, G2) each comprises a linearly directed operating movement running substantially perpendicular to each other parallel to the level of the display surface (3), on which the graphic list is displayed and/or
- the third operating process (G3) comprises a drawing together or pressing movement in the direction of the object to be selected (B42; 17).

5. The method according to any one of the preceding claims,
**characterized in that**
- a list entry (B; B4) is automatically pre-selected and
- when there is a change into a lower hierarchy level carried out by a second operating process (G2) list entries (B3 - B5; B41 - B42) are displayed, which are hierarchically subordinate to the pre-selected list entry (B; B4).

6. The method according to any one of the preceding claims,
**characterized in**
**that** the selection of the displayed partial quantity of the hierarchy level, into which it was changed, occurs as a function of a previously determined parameter.

7. The method according to any one of the preceding claims,
**characterized in**
**that** the database (9A; 9B; 9C) comprises a music collection, a video collection, a target address file, a file of persons, a telephone book, a user menu and/or a device inventory list.

8. An apparatus (2) for visualizing a hierarchically sortable database (9A; 9B; 9C), in particular in a vehicle (1), comprising
- an interface (7) for receiving a database (9A; 9B; 9C),
- means (4; 5) for detecting at least two different operating processes (G1 - G3),
- a display surface (3) for displaying a graphic list (15), the list entries of which can be visualized as graphic objects (A - C; B3 - B5; B41 - B42), and
- a control unit (6), which is connected to the interface (7) for receiving the database (9A; 9B; 9C), the means (4; 5) for detecting the operating processes (G1 - G3) and the display surface (3), wherein by means of the control unit (6) the graphic list (15) displayed on the display surface (3) can be controlled as a function of the different operating processes (G1 - G3), wherein
by means of the control unit (6)
- the database (9A; 9B; 9C) can be hierarchically sorted according to at least one sorting criterion, wherein a partial quantity of the sorted database (9A; 9B; 9C) of a hierarchy level can be displayed as a graphic list (15) on the display surface (3), and
- the display surface (3) is controllable in such a manner that the displayed partial quantity of the list (15) can be modified in such a manner that on detection of a first operating process (G1) the list entries of the list (15) are run through one after another within the selected hierarchy level, and that on detection of a second operating process (G2), which differs from the first operating process (G1), the displayed partial quantity of the sorted database (9A; 9B; 9C) can be modified in such a manner that the hierarchy level is changed and the partial quantity of the sorted database (9A; 9B; 9C) of the hierarchy level, into which it was changed, is displayed as a graphic list (15), wherein the displayed graphic objects (B3 - B5; B41 - B42) of the lower hierarchy level differ from the graphic object (B; B3 - B5) of the associated higher hierarchy level, wherein
- the database (9A; 9B; 9C) can be sorted according to at least two sorting criteria individually or in combination, wherein
the apparatus (2) is furthermore configured so that
- the database (9A; 9B; 9C) is hierarchically sorted in at least a first hierarchy level according to a first sorting criterion,
**characterized in that**
- the display surface is controllable in such a manner that if
- a list entry (B42) is selected in a hierarchy level subordinate to the first hierarchy level, and
- an attribute (17) associated with the list entry (B42) is selected, which is associated with a second sorting criterion,
- the database (9A; 9B; 9C) is re-sorted at least for the first hierarchy level according to the second sorting criterion and
- a partial quantity of the sorted database (9A; 9B; 9C) of the first hierarchy level is displayed as a graphic list (15).

## Revendications

1. Procédé pour la visualisation d'une base de données (9A; 9B ; 9C) triable hiérarchiquement, plus particulièrement dans un véhicule (1), dans lequel
- la base de données (9A ; 9B ; 9C) étant triée hiérarchiquement selon au moins un critère de tri,
- une partie de la base de données triée d'un niveau hiérarchique étant affichée sous la forme d'une liste graphique (15), dont les entrées sont visualisées comme des objets graphiques (A - C ; B3 - B5 ; B41 - B42),
- la partie affichée de la liste (15) est modifiée par un premier processus de commande (G1) de façon à ce que le premier processus de commande (G1) permette de parcourir les unes après les autres les entrées de la liste (15) à l'intérieur du niveau hiérarchique sélectionné et
- la partie affichée de la base de données (9A; 9B ; 9C) triée est modifiée par un deuxième processus de commande (G2), différent du premier processus de commande (G1), de façon à ce que le niveau hiérarchique soit modifié et à ce qu'une partie de la base de données (9A; 9B ; 9C) triée du niveau hiérarchique vers lequel on est passé soit représentée sous la forme d'une liste graphique (15), les objets graphiques affichés (B3 - B5 ; B41 - B42) d'un niveau hiérarchique plus bas étant différents de l'objet graphique (B ; B4) du niveau hiérarchique plus élevé correspondant,
- la base de données (9A ; 9B ; 9C) pouvant être triée selon au moins deux critères de tri individuellement ou en combinaison et
- la base de données (9A ; 9B ; 9C) étant triée hiérarchiquement dans au moins un premier niveau hiérarchique selon un premier critère de tri,
**caractérisé en ce que**
- la base de données est triée hiérarchiquement selon un deuxième critère de tri lorsque
- une entrée de liste (B42) est sélectionnée dans un niveau hiérarchique situé en dessous du premier niveau hiérarchique et
- un attribut (17) correspondant à l'entrée de liste (B42) est sélectionné, qui est associé avec le deuxième critère de tri,
- la base de données (9A ; 9B ; 9C) étant alors à nouveau triée, au moins pour le premier niveau hiérarchique, selon le deuxième critère de tri et
- une partie de la base de données (9A; 9B ; 9C) triée du premier niveau hiérarchique étant ensuite affichée sous la forme d'une liste graphique (15).

2. Procédé selon la revendication 1,
**caractérisé en ce que**
un objet graphique (10) d'un niveau hiérarchique supérieur visualise une indication visuelle (12, 12A) sur au moins deux objets graphiques (11) d'un niveau hiérarchique inférieur correspondant.

3. Procédé selon l'une des revendications précédentes,
**caractérisé en ce que**
une entrée de liste (B42) et/ou un attribut (17) correspondant à une entrée de liste (B42) est sélectionné par un troisième processus de commande (G3), qui est différent des premier et deuxième processus de commande (G1, G2).

4. Procédé selon l'une des revendications précédentes,
**caractérisé en ce que**
- un premier et un deuxième processus de commande (G1, G2) comprennent chacun un mouvement de commande linéaire orienté de manière globalement perpendiculaire par rapport à l'autre, parallèle au plan de la surface d'affichage (3) sur laquelle la liste graphique est affichée et/ou
- le troisième processus de commande (G3) comprend un mouvement de traction ou de compression en direction de l'objet à sélectionner (B42 ; 17).

5. Procédé selon l'une des revendications précédentes,
**caractérisé en ce que**
- une entrée de liste (B ; B4) est automatiquement présélectionnée et
- lors d'un changement vers un niveau hiérarchique inférieur, effectué grâce à un deuxième processus de commande (G2), les entrées de liste (B3 - B5 ; B41 - B42) qui sont hiérarchiquement inférieures à l'entrée de liste présélectionnée (B ; B4) sont affichées.

6. Procédé selon l'une des revendications précédentes,
**caractérisé en ce que**
la sélection de la partie affichée du niveau hiérarchique dans lequel on est passé, a lieu en fonction d'un paramètre prédéterminé.

7. Procédé selon l'une des revendications précédentes,
**caractérisé en ce que**
la base de données (9A ; 9B ; 9C) comprend une collection de musique, une collection de vidéos, un fichier d'adresses cibles, un fichier de personnes, un annuaire, un menu d'utilisateur et/ou une liste d'inventaire d'appareils.

8. Dispositif (2) pour la visualisation d'une base de données (9A; 9B ; 9C) triable hiérarchiquement, plus particulièrement dans un véhicule (1), comprenant
- une interface (7) pour la réception d'une base de données (9A ; 9B ; 9C),
- des moyens (4 ; 5) pour la détection d'au moins deux processus de commande (G1 - G3) différents,
- une surface d'affichage (3) pour l'affichage d'une liste graphique (15) dont les entrées peuvent être visualisées sous la forme d'objets graphiques (A - C ; B3 - B5 ; B41 - B42) et
- une unité de commande (6) qui est reliée avec l'interface (7) pour la réception de la base de données (9A ; 9B ; 9C), les moyens (4 ; 5) pour la détection des processus de commande (G1 - G3) et la surface d'affichage (3), l'unité de commande (6) permettant de contrôler la liste graphique (15) affichée sur la surface d'affichage (3) en fonction des différents processus de commande (G1 - G3), moyennant quoi, au moyen de l'unité de commande (6),
- la base de données (9A; 9B ; 9C) peut être triée hiérarchiquement selon au moins un critère de tri, une partie de la base de données (9A ; 9B ; 9C) triée d'un niveau hiérarchique pouvant être affichée sous la forme d'une liste graphique (15) sur la surface d'affichage (3) et
- la surface d'affichage (3) pouvant être contrôlée de façon à ce que la partie affichée de la liste (15) puisse être modifiée de façon à ce que, lors de la détection d'un premier processus de commande (G1), les entrées de la liste (15) à l'intérieur du niveau hiérarchique sélectionné sont parcourues les unes après les autres et à ce que, lors de la détection d'un deuxième processus de commande (G2), qui est différent du premier processus de commande (G1), la partie affichée de la base de données (9A ; 9B ; 9C) triée puisse être modifiée de façon à ce que le niveau hiérarchique soit modifié et une partie de la base de données (9A; 9B ; 9C) triée du niveau hiérarchique dans lequel on est passé, soit représenté sous la forme d'une liste graphique (15), les objets graphiques affichés (B3 - B5 ; B41 - B42) d'un niveau hiérarchique inférieur étant différents de l'objet graphique (B ; B3 - B5) du niveau hiérarchique supérieur correspondant,
- la base de données (9A ; 9B ; 9C) pouvant être triée selon au moins deux critères de tri individuellement ou en combinaison, le dispositif (2) étant en outre conçu pour
- trier hiérarchiquement la base de données (9A; 9B ; 9C) dans au moins un premier niveau hiérarchique selon un premier critère de sélection,
**caractérisé en ce que**
- la surface d'affichage peut être contrôlée de façon à ce que, lorsque
- une entrée de liste (B42) est sélectionnée dans un niveau hiérarchique inférieur au premier niveau hiérarchique et
- un attribut (17) correspondant à l'entrée de liste (B42) est sélectionné, qui esty associé à un deuxième critère de tri,
- la base de données (9A ; 9B ; 9C) est à nouveau triée, au moins pour le premier niveau hiérarchique, selon le deuxième critère de tri et
- une partie de la base de données (9A; 9B ; 9C) triée du premier niveau hiérarchique est affichée sous la forme d'une liste graphique (15).
